# FASCICULE DE BREVET EUROPEEN

(11) **EP 2 740 198 B1**
(45) Date de publication et mention de la délivrance du brevet: **27.06.2018**
(21) Numéro de dépôt: 12759793.8
(22) Date de dépôt: 31.07.2012
(51) Int. Cl.: H02K 11/04

(54) **CONNECTEUR, DISPOSITIF DE REDRESSEMENT DE COURANT MUNI D'UN TEL CONNECTEUR ET MACHINE ELECTRIQUE EQUIPEE D'UN TEL DISPOSITIF DE REDRESSEMENT**
VERBINDER, STROMRICHTER MIT EINEM SOLCHEN VERBINDER SOWIE MIT EINEM SOLCHEN STROMRICHTER AUSGESTATTETE ELEKTROMASCHINE
CONNECTOR, CURRENT-RECTIFYING DEVICE PROVIDED WITH SUCH A CONNECTOR, AND ELECTRIC MACHINE PROVIDED WITH SUCH A RECTIFICATION DEVICE

(30) Priorité: 05.08.2011 FR 1157176
(43) Date de publication de la demande: 11.06.2014
(73) Titulaire: Valeo Equipements Electriques Moteur, 94046 Créteil Cedex (FR)
(72) Inventeur: LEROY, Viriginie, F-93330 Neuilly Sur Marne (FR); TAKORABET, Azeddine, F-94100 Saint Maur Des Fosses (FR); GAS, Olivier, F-45000 ORLEANS (FR)
(74) Mandataire: Duprez, Richard
(86) Numéro de dépôt international: PCT/FR2012/051799
(87) Numéro de publication internationale: WO 2013/021116

(56) Documents cités:
- EP-A1- 1 551 093
- DE-A1- 4 439 863
- FR-A1- 2 950 753

## Description

### Domaine de l'invention

La présente invention concerne un connecteur pour un dispositif de redressement du courant produit par une machine électrique tournante, notamment polyphasée, telle qu'un alternateur et/ou un alterno-démarreur de véhicule automobile.

La présente invention concerne également un dispositif de redressement du courant équipé d'un tel connecteur et une machine électrique tournante équipée d'un tel dispositif de redressement.

### Etat de la technique

Il est aujourd'hui connu des alternateurs de véhicules automobiles comportant un stator bobiné entourant un rotor et au moins un bobinage d'excitation du rotor. Ils fonctionnent comme générateur de courant électrique pour alimenter électriquement le réseau de bord d'un véhicule automobile et /ou pour recharger sa batterie. Pour cela, le rotor de l'alternateur est entrainé en rotation par le moteur thermique du véhicule via un dispositif de transmission de mouvement et son bobinage d'excitation est alimenté par un courant électrique, dit courant d'excitation. Le rotor, ainsi magnétisé, génère une force électromotrice de la sorte qu'un courant électrique alternatif est induit dans le bobinage du stator de la machine, configuré pour être relié au réseau de bord et à la batterie par l'intermédiaire d'au moins un dispositif de redressement du courant alternatif en courant continu.

Il est connu d'intégrer le dispositif de redressement au niveau de la machine électrique tournante en utilisant un pont redresseur comprenant plusieurs bras électriquement conducteurs munis chacun de deux diodes de redressement de courant alternatif en courant continu entre lesquels sont connectées les sorties des phases de la machine électrique. Pour chaque bras, l'une des diodes est reliée électriquement à un palier de ladite machine électrique, mis à la masse, et à un aménagement de connexion du bras connecteur, tandis que l'autre diode est reliée électriquement à un autre aménagement de connexion du bras du connecteur et à un dissipateur de chaleur, relié à la batterie du véhicule via un câble. Les diodes présentent des électrodes de connexion en forme de tige, appelées queues de diode, qui sont soudées aux aménagements de connexion des bras du connecteur. Les aménagements de connexion consistent donc en des bornes de connexion. Pour plus de précisions on se reportera par exemple au document FR 2 754 650 montrant le connecteur, qui comporte un corps en matière électriquement isolante dans lequel sont noyés des conducteurs électriques sous la forme de traces électriquement conductrices localement apparentes au niveau des bornes de connexion et des aménagement de connexion aux sorties des phases du stator de la machine. Les aménagements de connexion aux sorties des phases constituent des bornes de connexion aux sorties des phases

Dans les connecteurs actuels, la localisation des bornes de connexion ne facilite pas l'assemblage, en particulier le soudage des queues de diodes aux bornes des connecteurs.

Les documents DE 44 39 863 et EP 1 551 093 divulguent des connecteurs pour dispositif de redressement.

### Objet de l'invention

L'invention se propose d'améliorer la situation et concerne un connecteur pour dispositif de redressement du courant produit par une machine électrique tournante, notamment alternateur de véhicule automobile, ledit connecteur étant configuré pour établir, pour chaque phase de la machine électrique, une connexion électrique entre une phase de ladite machine électrique et un bras respectif du dispositif de redressement du courant, ledit connecteur comprenant des conducteurs électriques présentant au moins deux bornes de connexion.

Selon l'invention, lesdites bornes de connexion sont positionnées angulairement distantes l'une de l'autre de façon à ce que des électrodes de connexion d'éléments de redressement de courant d'au moins deux, notamment de chacun, des bras du dispositif de redressement de courant, prévues soient disposées sur un même arc de cercle, puissent être au contact desdites bornes de connexion.

On homogénéise de la sorte la distribution des points de liaison entre le connecteur et les électrodes des éléments de redressement de courant. Leur soudage pourra ainsi être réalisé plus facilement, en particulier à l'aide de robots du fait que les électrodes sont disposées sur la même circonférence.

On diminue le temps de soudage.

Selon différents modes de réalisation, pris ensemble ou séparément :
- les bornes de connexion pour les électrodes des éléments de redressement présentent une surface de contact se trouvant sur un même arc de cercle,
- tout ou partie des conducteurs s'étendent angulairement au moins d'une de leurs bornes de connexion pour les électrodes des éléments de redressement de courant à l'autre et lesdites bornes de connexion sont formées dans une portion des conducteurs,
- tout ou partie des conducteurs sont radialement déformés en forme de créneau au niveau de leurs bornes de connexion pour les électrodes des éléments de redressement de courant,
- les bornes de connexion pour les électrodes des éléments de redressement de courant sont configurées pour que lesdites électrodes puissent être soudées d'un même côté desdites bornes,
- tout ou partie des conducteurs comprennent également une borne de connexion pour l'une des phases de la machine électrique,
- la borne de connexion pour l'une des phases de la machine électrique est angulairement située entre les bornes de connexion pour les électrodes des éléments de redressement de courant du conducteur correspondant,
- tout ou partie des conducteurs comprennent une branche principale globalement d'orientation radiale,
- la branche principale est en forme de bras portant à sa périphérie externe la borne de connexion pour l'une des phases de la machine électrique du conducteur, prévue radialement distante desdites bornes de connexion pour les électrodes des éléments de redressement,
- la branche principale est prolongée à sa périphérie interne par deux portions portant chacune l'une des bornes de connexion pour les électrodes des éléments de redressement, chaque dite portion étant angulairement dans le prolongement l'une de l'autre et axialement décalée l'une par rapport à l'autre, lesdites portions se réunissant à l'une de leur extrémité pour définir la branche principale portant la borne de connexion pour l'une des phases de la machine électrique,
- la borne de connexion pour l'une des sorties des phases de la machine électrique présente une extrémité en forme de crochet,
- les bornes de connexion pour les phases de la machine électrique sont sur un même second arc de cercle, concentrique au premier arc de cercle au niveau duquel se trouvent les surfaces de contact des bornes de connexion pour les électrodes des éléments de redressement,
- lesdits conducteurs sont positionnés dans le prolongement angulaire les uns des autres,
- les conducteurs se chevauchent angulairement,
- deux des conducteurs sont prolongés angulairement pour définir des bornes de connexion à un régulateur de tension de la machine électrique,
- l'une au moins des portions portant une borne de connexion pour une électrode d'un élément de redressement de courant est prolongée par une branche globalement d'orientation radiale présentant extérieurement une borne de connexion pour une entrée d'une phase de la machine électrique,
- le connecteur comprend un conducteur supplémentaire comprenant une branche de liaison électrique portant des branches présentant en forme de bras globalement d'orientation radiale présentant extérieurement des bornes de connexion pour les entrées des phases de la machine électrique,
- la branche de liaison électrique dudit conducteur supplémentaire, dit conducteur de connexion statorique, étant positionnée dans le prolongement axiale d'au moins deux portions des conducteurs portant les bornes de connexion pour les électrodes du dispositif de redressement du courant, dit conducteurs de bras de redressement,
- les conducteurs de bras de redressement et/ou le conducteur de connexion statorique sont surmoulés dans un matériau électriquement isolant formant un corps du connecteur,
- le corps du connecteur comprend des fixations à un dissipateur positif du dispositif de redressement,
- le corps du connecteur comprend un muret contenant les portions des conducteurs portant les bornes de connexion pour les éléments de redressement de courant,
- le muret du connecteur contient la branche de liaison électrique du conducteur de liaison statorique,
- le muret est globalement de forme annulaire,
- le muret porte les branches principales des conducteurs,
- le muret porte des branches présentant en forme de bras globalement d'orientation radiale présentant extérieurement des bornes de connexion pour les entrées des phases de la machine électrique,
- les branches sont rayonnantes vers l'extérieure,
- l'écartement angulaire entre les branches en forme de bras globalement d'orientation radiale portant les bornes de connexion pour les sorties ou les entrées des phases de la machine électrique est configuré pour autoriser une circulation d'air au niveau des électrodes des éléments de redressement.

Selon un aspect de l'invention, le connecteur pourra intégrer le régulateur de tension, de la machine électrique.

L'invention concerne également un dispositif de redressement du courant comprenant plusieurs éléments de redressement de courant, un dissipateur, dit négatif, un dissipateur, dit positif, et un connecteur, tel que décrit plus haut, destiné à établir une connexion électrique entre les éléments de redressement et les phases de la machine électrique dont le courant est destiné à être redressé par ledit dispositif.

Selon un aspect de l'invention, le dissipateur positif est situé entre le dissipateur négatif et le connecteur.

Selon un autre aspect de l'invention, qui pourra être combiné avec le premier, certains des éléments de redressement de courant sont reliés au dissipateur positif, prévu muni d'ailettes de refroidissement situées extérieurement par rapport auxdits éléments de redressement.

L'invention concerne encore une machine électrique tournante équipée d'un dispositif de redressement tel que décrit plus haut.

Il pourra s'agir d'une machine électrique tournante à inducteur fonctionnant sous courant continu, avec ou sans balais.

L'invention sera mieux comprise et d'autres avantages apparaîtront à la lumière de la description suivante qui n'est donnée qu'à titre indicatif et qui n'a pas pour but de la limiter, accompagnée des dessins joints.

Brève description des dessins
- la figure 1 illustre en perspective un exemple de dispositif de redressement du courant équipé d'un connecteur selon l'invention,
- la figure 2 illustre en éclaté le dispositif de la figure 1,
- la figure 3 est une vue analogue à la figure 1 sans le stator de la machine électrique tournante avec modification de la borne B+ ;
- la figure 4 est illustre en perspective les conducteurs d'un exemple de dispositif de redressement du courant selon l'invention,
- la figure 5 illustre en perspective le connecteur intégrant les conducteurs de la figure 4,
- la figure 6 est une vue de dessus du connecteur de la figure 5,
- la figure 7 est une vue analogue à la figure 4 pour un autre exemple de réalisation de l'invention ;
- les figures 8 à 10 sont des vues montrant, en vue de dessus, des variantes de réalisation du connecteur des figures 1 à 3.

### Description d'exemples de réalisation de l'invention

Ainsi qu'on le sait une machine électrique tournante, telle que décrite dans les documents US 7 019 424 et FR 2 744 575 auxquels on se reportera pour plus de précisions, comporte un carter doté d'au moins deux flasques appelés respectivement palier avant et palier arrière. Le palier avant est adjacent à un organe de transmission de mouvement, telle qu'une poulie, appartenant au dispositif de transmission de mouvement entre le moteur thermique et la machine électrique.

L'organe d'entraînement est solidaire en rotation d'un arbre, appelé arbre de rotor, portant à fixation le rotor de la machine entouré par le stator de celle-ci. L'axe de l'arbre de rotor constitue l'axe de rotation de la machine. Le stator comporte un corps sous la forme d'un paquet de tôle doté d'encoches pour le montage d'un bobinage. Ce bobinage, porté par le corps du stator, comporte, dans le cas d'une machine électrique tournante polyphasée, plusieurs phases, chaque phase comprenant une entrée, une sortie et au moins un enroulement reliant l'entrée à la sortie comme décrit par exemple dans le document FR 2 818 821. De manière connue les phases peuvent être connectées en étoile ou en triangle. Le bobinage du stator s'étend de part et d'autre du corps du stator pour former des chignons.

Le corps du stator est porté par le carter de la machine ; les paliers avant et arrière de celle-ci étant configurés en conséquence. Ces paliers sont configurés centralement pour le montage de roulements de rotation de l'arbre de rotor, dont l'axe de symétrie axiale constitue l'axe de rotation de la machine.

La machine comporte également un dispositif de redressement du courant alternatif en courant continu comprenant plusieurs bras, ainsi qu'un régulateur de tension pilotant l'intensité du courant circulant dans le ou les bobinages d'excitation du rotor pour maintenir la tension de l'alternateur dans une plage de valeurs déterminée pour que les consommateurs du véhicule et/ou la batterie travaillent de manière fiable.

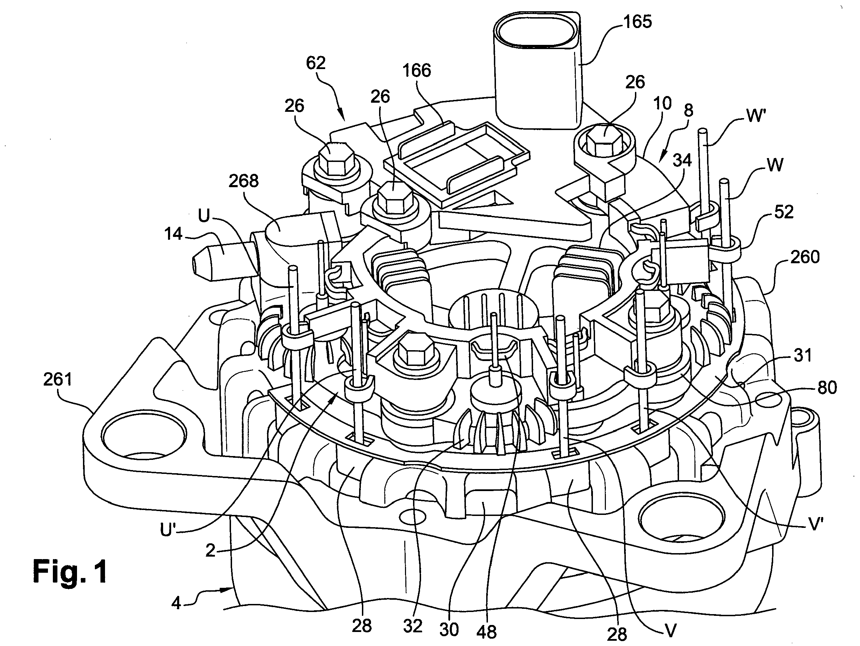

Le dispositif de redressement du courant et le régulateur de tension pourront être portés par le palier arrière comme dans le mode de réalisation des figures 1 à 3, mais l'inverse est possible. Ainsi en variante le dispositif de redressement du courant et le régulateur de tension pourront être portés par le palier avant comme dans le document FR 2 744 575.

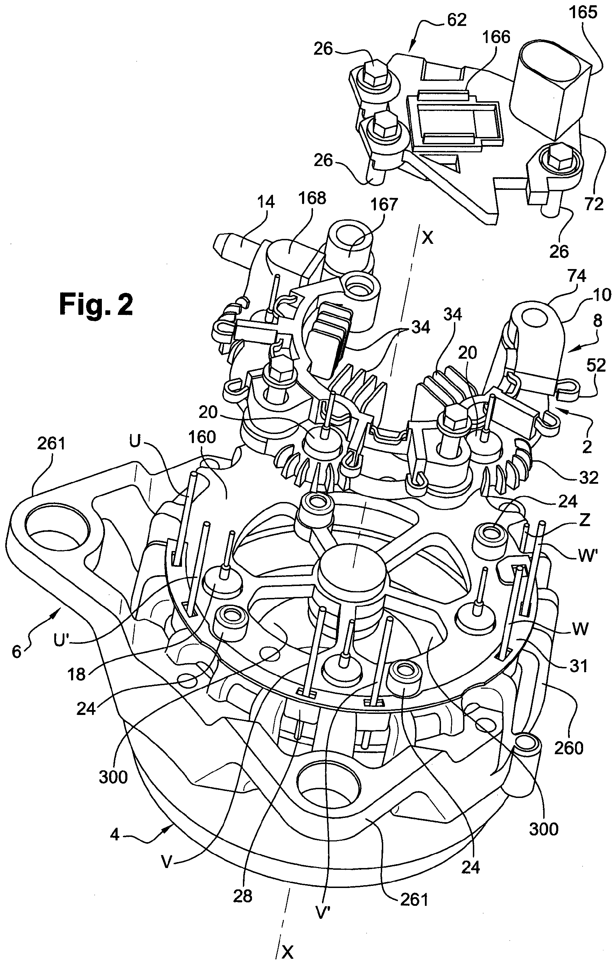

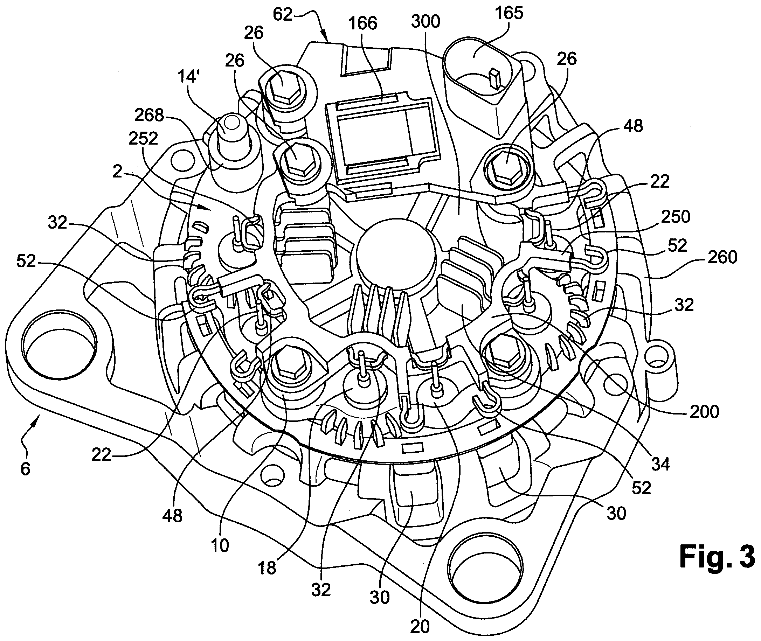

Dans les figures 1 à 3 on voit en 6 le palier arrière et en 4 une partie du stator de la machine électrique tournante, le capot de protection du dispositif de redressement du courant et du régulateur de tension n'étant pas représenté. Ce palier 6 est par exemple en Aluminium et constitue un dissipateur de chaleur. Il est relié à la masse du véhicule automobile à la faveur d'au moins une patte de fixation 261 et a ici une forme creuse. Il comporte un fond 160 doté d'ouvertures d'entrée d'air 300 globalement de forme trapézoïdale. Ce fond 160 est de forme annulaire et d'orientation transversale par rapport à l'axe X-X (Figure 2) de l'arbre de rotor. Il porte dans l'exemple des figures 1 à 6 le régulateur de tension 62, des éléments de redressement de courant sous la forme de diodes 18, 20 appartenant au dispositif de redressement du courant alternatif en courant continu. Ce fond 160 est prolongé à sa périphérie externe par une jupe 260, d'une part, globalement d'orientation axiale par rapport à l'axe X-X de l'arbre de rotor et d'autre part, dotée d'ouvertures 30 de sortie d'air de forme oblongue. Ces ouvertures 30 sont d'orientation axiale par rapport à l'axe X-X et affectent la périphérie externe du fond 160 comme mieux visible à la figure 3. Au moins un ventilateur solidaire du rotor pourra être monté à l'intérieur du carter pour provoquer une circulation d'air entre les ouvertures d'entrée d'air 300 et de sortie d'air 30 afin de refroidir le dispositif de redressement du courant, le régulateur de tension 62 et le bobinage du stator polyphasé comme décrit dans le document US 7 019 424.

Ainsi comme illustré dans le mode de réalisation des figures 1 à 6, l'invention concerne tout d'abord un dispositif de redressement du courant alternatif en courant continu, notamment du courant produit par le stator d'une machine électrique tournante polyphasée telle que, par exemple, un alternateur de véhicule automobile.

Il comprend :
- un dissipateur de chaleur positif 2 comportant une borne 14, 14' dite borne B+, pour sa liaison via un câble à la borne positive de la batterie du véhicule;
- un dissipateur de chaleur négatif 6, relié à la masse, le plus souvent le palier arrière de la machine ou une plaque fixée sur le palier arrière ou en variante de manière précitée sur le palier avant;
- un connecteur 8, doté d'un corps 10 en matière électriquement isolante, telle que de la matière plastique, dans lequel sont noyées des conducteurs électriques 40, 42, 44, tels que des conducteurs métalliques, pour former des bras du pont redresseur de courant alternatif en courant continu défini par le dispositif de redressement du courant.

Le connecteur 8 et le dissipateur 2 sont globalement de forme annulaire. Ils sont en forme d'arc de cercle et présentent une fente délimitant deux extrémités circonférentielles comme visible par exemple à la figure 2.

Les conducteurs 40, 42, 44 sont localement apparents de manière décrite ci- après.

Les dissipateurs de chaleur 2, 6 pourront être métallique par exemple en Aluminium. En variante le dissipateur positif pourra être en cuivre. Les conducteurs électriques 40, 42, 44 pourront être en cuivre, ou en aluminium.

Il comprend également des éléments de redressement de courant 18, 20. Plus précisément, chaque bras du dispositif de redressement du courant pourra comprendre deux éléments de redressement de courant, l'un 18 monté entre le dissipateur négatif 6 et le connecteur 8, l'autre 20 monté entre le connecteur 8 et le dissipateur positif 2.

Il pourra s'agir de diodes, l'une des diodes, dite négative, ayant son anode reliée au dissipateur négatif 6 et sa cathode au connecteur 8 et l'autre, dite positive, ayant son anode reliée au connecteur 8 et sa cathode au dissipateur positif 2. Lesdites diodes positives et négatives sont, par exemple, respectivement emmanchées à force, via leur corps moleté à cet effet, dans des trous des dissipateurs 2, 6 et sont munies d'électrodes 22 électriquement conductrices, telles que des queues de diodes en forme de tige, reliées au bras concerné connecteur 8. L'utilisation de diodes correspond, notamment, à l'utilisation du dispositif de redressement du courant avec des alternateurs. Les électrodes 22 sont donc des électrodes de connexion aux bras du connecteur 8. En variante le corps des diodes négatives est emmanché à force dans une plaque métallique solidaire du dissipateur de chaleur négatif. En variante les corps des diodes 18, 20 pourront être fixés par brasage sur les dissipateurs 2, 6 ou en variante par brasage sur une plaque

Dans le mode de réalisation des figures 1 à 6 les diodes négatives 18 sont portées de manière précitée par le fond 160 du palier 6.

Elles sont implantées dans ce mode de réalisation dans le prolongement radial des bras délimitant deux ouvertures d'entrée d'air consécutives 300 comme visible à la figure 2.

Les diodes positives 20, portés par le dissipateur 2, sont implantées entre les diodes 18. Elles pourront être implantées au moins en partie en regard d'une ouverture 300 d'entrée d'air.

Dans le cas d'alterno-démarreur, c'est-à-dire de machine électrique destinée à fonctionner de façon réversible aussi bien en mode alternateur qu'en mode moteur électrique, notamment pour démarrer le moteur thermique du véhicule, il pourra s'agir de transistors du type MOSFET. Dans ce cas le dispositif de redressement de courant est configuré pour former un pont redresseur de courant en mode alternateur (Transformation de l'énergie mécanique en énergie électrique) et pour former un onduleur en mode moteur électrique (Transformation de l'énergie électrique en énergie mécanique) ; les transistors du type MOSFET étant pilotés en conséquence.

Par ailleurs, le connecteur 8 est destiné à établir une connexion électrique entre les éléments de redressement de courant 18, 20 et les sorties u, v, w des phases de la machine électrique, ici prévue triphasée. Ces phases, de manière précitée, comportent chacune au moins un enroulement porté par le corps du stator 4. Les enroulements pourront être continus. En variante ils pourront comporter des segments conducteurs soudés entre eux pour former l'enroulement. Les conducteurs pourront être de section ronde carrée ou rectangulaire. Ils seront de préférence recouverts d'une mince couche isolante, telle que de l'émail. Les sorties u, v, w sont donc recouvertes d'une couche isolante qu'il convient d'enlever.

Autrement dit, les éléments de redressement 18, 20 sont électriquement groupés par paires et connectés à l'une des sorties d'un enroulement d'une des phases de la machine électrique à l'aide du connecteur 8. Plus précisément, dans le cas d'un alternateur, le connecteur 8 relie une sortie u, v, w d'un enroulement de phase de l'alternateur à une diode positive, portée par le dissipateur positif 2, et à une diode négative, portée par le dissipateur négatif 6.

Le pont redresseur comprend, par exemple, autant de bras que de sorties de phases de la machine électrique, ici trois bras pour une machine électrique tournante du type triphasé.

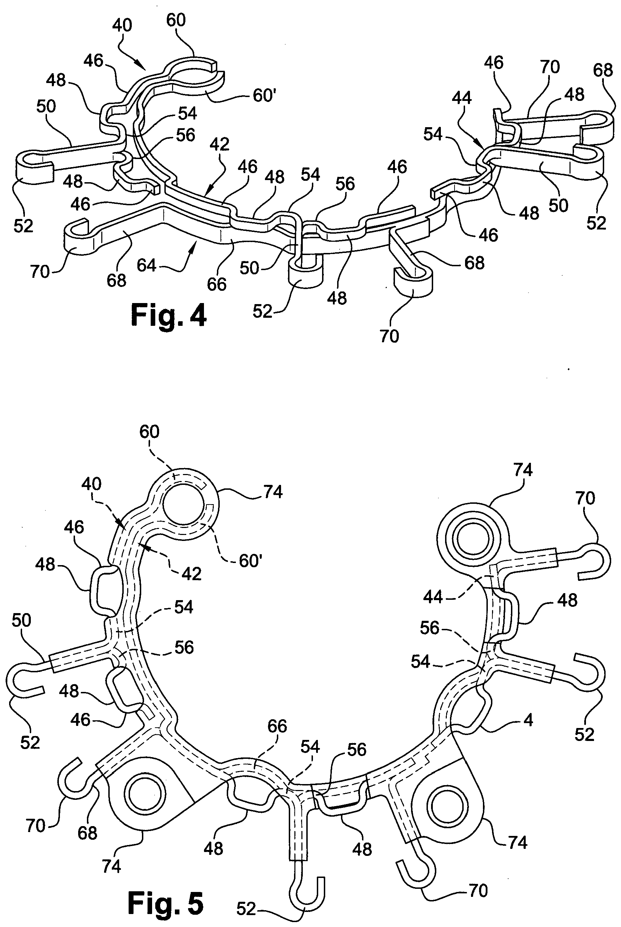

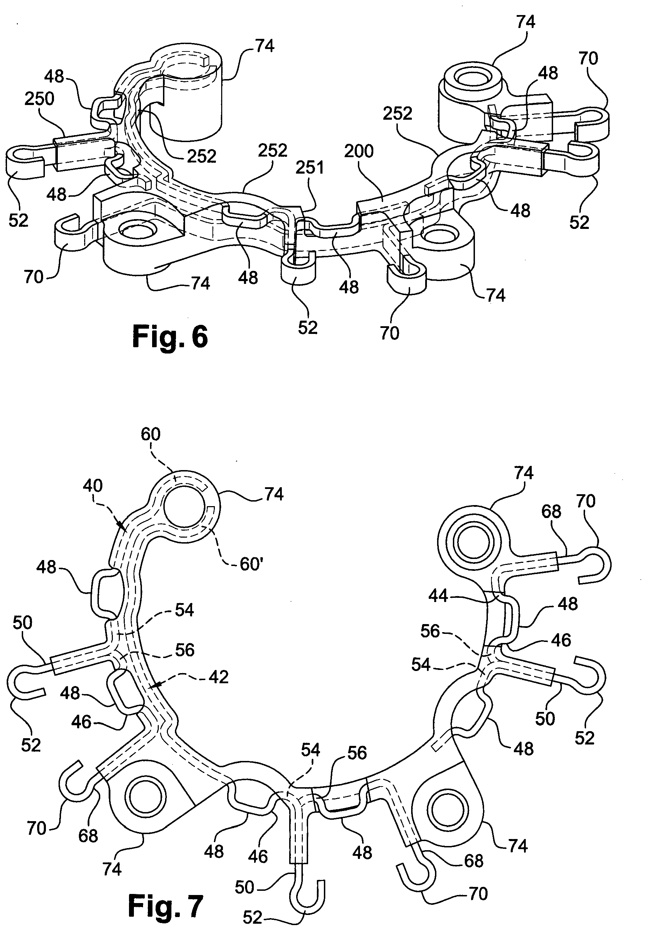

Les phases pourront être connectées en étoile comme visible dans les figures 4 à 6. En variante les phases pourront être connectées en triangle comme visible dans le mode de réalisation de la figure 7.

De façon à faciliter le montage, les électrodes 22 de connexion des éléments de redressement 18, 20 aux bras du pont redresseur du dispositif de redressement du courant sont, selon une caractéristique, disposées sur un même arc de cercle. Autrement dit les électrodes 22 sont implantées sur la même circonférence.

Selon une autre caractéristique le connecteur 8 est implanté au-dessus du dissipateur de chaleur positif 2 de sorte que le dissipateur de chaleur positif 2 est intercalé à isolation électrique axialement entre le fond 160 du palier 6 et le connecteur 8. Le régulateur 62 est intercalé dans ce mode de réalisation entre les extrémités circonférentielles du connecteur 8.

Le régulateur de tension 62 pourra comporter un porte-balais doté de deux logements pour le guidage de balais aptes à coopérer chacun avec une bague collectrice portée par l'extrémité arrière de l'arbre du rotor comme décrit et visible à la figure 1 du document FR 2 811 156.

En variante le régulateur de tension 62 pourra être dépourvu d'un porte balais et de bagues collectrices comme décrit dans les documents FR 1 591 189 et FR 2 044 219. Dans ce cas le bobinage d'excitation du rotor de la machine électrique tournante est fixe et les sorties de ce bobinage sont reliées au circuit électrique du régulateur de tension 62. On voit en Z à la figure 2 l'une des sorties de ce bobinage. Cette disposition est avantageuse car le régulateur de tension 62 est circonférentiellement plus court ce qui permet de rallonger circonférentiellement le dissipateur positif 2 ainsi que le connecteur 8.

Il est alors possible d'implanter un plus grand nombre de diodes 18, 20 de sorte qu'en variante la machine électrique tournante pourra comporter quatre phases.

Le régulateur 62 pourra comporter un circuit électrique avec des traces métalliques électriquement conductrices du type de celui décrit dans les documents FR 2 754 650 et EP 1058 369 auxquels on se reportera. Ces traces sont noyées dans le corps 72 en matière électriquement isolante que comporte le régulateur 62.

Dans ce cas le connecteur 8 pourra comporter deux conducteurs 40, 42 prolongés pour former à l'une de leurs extrémités chacun un demi anneau 60,60' apparent (Figure 4 et 5) relié électriquement à une extrémité en forme de demi anneau d'une trace électriquement conductrice du régulateur reliée à son autre extrémité au circuit intégré par exemple du type Asic, que comporte le régulateur pour prise d'informations sur deux phases de la machine. Les demi- anneaux 60, 60' forment des bornes de connexion avec le régulateur 62.

Les conducteurs 40, 42 comporte également chacun à l'autre de leurs extrémités un agencement de connexion formant une borne de connexion 52 avec l'une des sorties des phases de manière décrite ci-après. Le régulateur 62 reçoit donc via les conducteurs 40, 42 des informations concernant deux phases de la machine. Ce régulateur comporte également un connecteur 165 pour recevoir des informations provenant par exemple du contrôle moteur du véhicule et un dissipateur métallique 166, par exemple en cuivre ou en Aluminium, implanté au-dessus du circuit intégré du régulateur pour refroidir celui-ci. Le dissipateur présente ici une section en forme de U.

La liaison entre les extrémités 60, 60' électriquement conductrices du connecteur 8 et du régulateur de tension 62 pourra être réalisée à l'aide d'aménagements de connexion pour recevoir un organe de fixation unique assurant une pluralité de contact électriques comme mieux visible dans les figures 5 à 7 du document FR 2 754 650.

Ainsi, comme visible dans les figures 1 à 3, le régulateur de tension 62 pourra être fixé sur le fond 160 du palier 6 à l'aide de trois organes de fixation 26, tels que des vis en variante des goujons ou des boulons. Le fond 160, dans un mode de réalisation pourra porter trois cheminées saillantes taraudées 24 (dont deux sont visibles à la figure 2) pour fixation locale du corps du régulateur de tension 62 à l'aide des vis 26 traversant chacune un trou du régulateur 62 pour se visser dans les taraudages des cheminées. Ces trous pourront appartenir chacun à une oreille du corps 72 du régulateur 62 comme visible dans les figures 1 à 3 et dans les figures 1 et 2 du document EP 1 058 369.

Deux autres cheminées taraudées 24 sont prévues pour la fixation du corps 10 du connecteur 8 et du dissipateur de chaleur positif 2 sur le fond 160 également à l'aide de vis 26.

Comme mieux visible dans les figures 1 à 3 il existe dans ce mode de réalisation au total cinq vis de fixation 26 et cinq cheminées 24.

Ces vis 26 et cheminées 24, qui pourront avoir des hauteurs différentes en fonction des pièces à fixer.

Dans un mode de réalisation les cheminées 24 pourront présenter à leur périphérie externe un changement de diamètre pour le montage de canons d'isolation en matière électriquement isolante, tel que de la matière plastique, dont certains sont associés à des canons complémentaires dont l'un est référencé en 80 à la figure 1. Ces canons sont de forme cylindrique et présentent un changement de diamètre. La portion de plus grand diamètre du canon est enfilée sur la périphérie externe de plus grand diamètre de la cheminée 24, tandis que la portion de plus petit diamètre du canon est enfilée dans un trou par exemple du dissipateur 2 pour isoler électriquement le dissipateur 2 par rapport au corps de la vis 26 traversant le trou pour se visser dans la cheminée.

L'épaulement formé à la faveur du changement de diamètre du canon vient intérieurement en appui sur l'épaulement formé à la faveur du changement de diamètre réalisé à la périphérie externe de la cheminée.

Le canon isolant épaulé, centralement creux pour le passage de la vis, est enfilé sur la cheminée 24 épaulée à la manière d'une chaussette. Ce canon pénètre ici en partie dans un trou du dissipateur positif 2, dont la face dorsale est en appui sur la périphérie externe de l'épaulement du canon. Le canon complémentaire 80 associé pénètre également dans le trou du dissipateur positif avec un jeu entre les deux extrémités en vis à vis du canon et du canon complémentaire 80. Ce canon complémentaire 80 est épaulé extérieurement. Ainsi qu'il ressort de la description et des figures 1 à 3 le dissipateur positif 2 est serré via les vis 26 entre les épaulements en vis-à-vis des paires de canon et canon complémentaire 80 de manière décrite ci-après.

Grâce à ces dispositions le dissipateur positif 2 pourra être isolé électriquement par rapport au fond 160 du palier relié électriquement à la masse du véhicule. En outre le dissipateur 2 est surélevé par rapport au fond 160 ce qui favorise son refroidissement, un espace existant entre le fond 160 et la face dorsale du dissipateur.

Le régulateur 62 comporte d'autres traces électriquement conductrices dotées d'extrémités en forme d'anneau pour établir des contacts électriques avec le dissipateur positif 2 et avec la masse via le palier 6. Ces traces sont reliées électriquement à leur autre extrémité au circuit intégré du régulateur.

Ainsi la vis 26 la plus proche du connecteur 165 assure le contact électrique de l'extrémité en forme d'anneau la trace concernée du régulateur 62 à la masse avec intercalation de l'extrémité circonférentielle trouée du corps 10 du connecteur. La deuxième vis 26 la plus proche du dissipateur 166 assure, de manière précitée, le contact électrique entre les deux extrémités 60, 60' des conducteurs 40, 42 avec les deux extrémités des deux traces électriques du régulateur 62. Les extrémités de ces traces pourront être en forme de demi- anneau ; des aménagements étant réalisés à la faveur des corps électriquement isolant, par exemple en matière plastique, respectivement 10 et 72 du connecteur 8 et du régulateur 62 configurés en conséquence.

La troisième vis 26, plus éloignée du dissipateur 166 que la deuxième vis 26, assure le contact électrique entre l'extrémité de la troisième trace électrique en forme d'anneau du régulateur 62 avec le dissipateur de chaleur positif 2 avec intervention d'un manchon 167 solidaire du dissipateur 2. Ce manchon forme également une entretoise entre le dissipateur et la cheminée taraudée 24 saillante associée (Non visible) du fond 160 du palier 6. Un canon décrit ci-dessus est enfilé sur cette cheminée et est engagé dans le manchon 167. Le manchon 167 pourra appartenir à un prolongement en forme d'oreille troué que présente le dissipateur 2 au voisinage de sa borne 14, 14' dite borne B+.

La borne B+ pourra être d'orientation radiale comme visible en 14 dans les figures 1 et 2 ou être d'orientation axiale, comme visible en variante en 14' dans la figure 3. A la figure 3 la borne 14' consiste en une vis dont la tête est logée dans un logement prolongé par un manchon 168 comme décrit dans le document FR 2 807 583. En variante (figures 1 et 2) le dissipateur positif 2 présente un retour perpendiculaire troué 268 servant d'appui à la tête de la borne 14 en forme de vis et traversé par la partie filetée de la vis. Le câble reliée à la borne positive de la batterie présente, de manière connue une oreille traversée par la vis de la borne B+ avec intervention d'un écrou de fixation.

Selon une autre caractéristique les électrodes 22 des diodes 18, 20, ici en forme de queues sous la forme de tiges, sont toutes dirigées axialement dans le même sens en direction opposée au stator de la machine électrique. Les électrodes 22 des diodes 18, 20 peuvent avoir la même longueur. En variante les électrodes 20 sont plus courtes que celles des diodes 18 du fait qu'elles sont portées par le dissipateur 2 surélevé.

Les sorties u, v, w des phases de la machine électrique tournante sont également dirigées axialement dans le même sens. Elles traversent le fond 160 du palier 6 à la faveur des ouvertures de sortie d'air 30.
Pour ce faire des cheminées 28 de passage des sorties u, v, w des phases à travers le palier 6 pourront être prévus, notamment au niveau des ouvertures de sortie d'air 30 du palier 6. Lesdites cheminées 28 sont reliées par une couronne 31 en contact avec la face arrière du fond du palier 6. Les cheminées 28 et la couronne 31 sont en matière électriquement isolante, ici en matière plastique.
Comme décrit dans le document FR 2 818 821 les phases dans le cadre d'un montage en étoile comportent une entrée reliées à un point neutre.
Ce point neutre est formé à la faveur d'une pièce de liaison statorique constituant un conducteur électrique supplémentaire de connexion statorique.
Ce conducteur supplémentaire fait partie du stator en étant implanté au niveau d'un des chignons du bobinage du stator.
Le connecteur 8 selon l'invention pourra être connecté uniquement aux sorties des phases u, v, w, le conducteur supplémentaire de connexion statorique étant porté par le stator.
En variante, comme représenté dans les figure 1 à 6, le conducteur supplémentaire de liaison statorique 64, de manière décrite ci-après, est implanté dans le connecteur 8 ce qui permet de simplifier le stator de la machine électrique, les entrées u', v', w' des phases étant prolongées axialement pour traverser le fond 160 à la faveur des ouvertures de sorties d'air 30 de la même manière que les sorties u, v, w.
Comme visible dans les figures 1 et 2 les sorties u, v, w et les entrées u', v', w' des phases sont groupées circonférentiellement par paire.
Ainsi dans le mode de réalisation des figures 1 à 6 il existe trois autre cheminées pour le passage des trois entrées supplémentaires u', v', w' des phases.
Une entrée et une sortie d'une même phase traversent chacune à la faveur d'une cheminée 28 une ouverture de sortie d'air 30, les dites sorties étant consécutives c'est-à-dire adjacentes.

La couronne 31 est implantée à la périphérie externe du fond transversal 160 du palier 6; les ouvertures 30 constituant les sortie d'air affectant également la périphérie externe du fond de ce fond 160.

Les sorties du bobinage fixe d'excitation du rotor de la machine sont implantées circonférentiellement au-delà de l'entrée w' et traversent chacune axialement une ouverture de sortie d'air 30 au niveau de la périphérie externe du fond 160 comme les sorties des phases.

Suivant une caractéristique une caractéristique la couronne 31 s'étend à l'extérieur de la périphérie externe du dissipateur de chaleur positif 2.

Le dissipateur positif 2 est disposé sur le palier 6, par exemple, de façon à être positionné de façon coaxiale à l'arbre de rotor de ladite machine. Il est ici situé, de manière précitée, entre le palier 6 et le connecteur 8. Il est muni d'ailettes de dissipation thermiques 32, 34, globalement d'orientation radiale, destiné à être balayé par un flux d'air, par exemple généré par des moyens de ventilation, tel qu'un ventilateur, tournant avec la machine électrique.

En variante, comme décrit dans le document FR 2 744 575, les moyens de ventilation pourront comporter une pompe centrifuge.

Il pourra en particulier être muni, selon une caractéristique, d'ailettes de refroidissement 32 situées extérieurement par rapport à l'arc de cercle le long duquel sont situées les électrodes 22 des éléments de redressement 20 reliés au dissipateur positif 2. Il pourra également être muni d'ailettes 34, situé à sa périphérie interne. La présence des ailettes externes 32 est rendue possible grâce à la configuration du connecteur 8, décrit plus en détails ci-après, permettant de libérer de la place au niveau des diodes 20.

En variante non représentée, grâce à la libération de la place, on pourra prévoir des ouvertures de passage d'air dans le dissipateur 2 au niveau des corps des diodes positives 20 pour améliorer encore le refroidissement.

L'invention concerne encore un connecteur 8 tel qu'évoqué plus haut. Comme déjà dit, ledit connecteur 8 est configuré pour établir, pour chaque phase de la machine électrique, une connexion électrique entre l'une des sorties des phases de ladite machine électrique et un bras du pont redresseur du dispositif de redressement du courant.

Comme illustré aux figures 1 à 6 ledit connecteur 8 comprend les conducteurs électriques 40, 42, 44 précités.

Ces conducteurs pourront être de section circulaire ou polygonale. Les conducteurs de section circulaire pourront comporter des méplats.

En variante ces conducteurs 40, 42, 44 sont de section carrée ou rectangulaire. Lorsque ces conducteurs sont de section rectangulaire ils pourront être selon une caractéristique d'orientation transversale par rapport à l'axe X-X, leur plus petit côté étant en regard du fond 160. Ces conducteurs 42, 44, 46 de section rectangulaire sont donc perpendiculaires aux conducteurs du connecteur décrit dans le document FR 2 754 650 précité. Le connecteur est ainsi moins encombrant transversalement ce qui permet de libérer des espaces pour l'implantation des diodes positives 20.

Selon une caractéristique chaque conducteur 40, 42, 44 présente deux bornes de connexion 46, positionnées angulairement distantes l'une de l'autre de façon à ce que les électrodes 22 de connexion, en particulier les queues de diode en forme de tiges dans l'exemple illustré, des éléments de redressement de courant 18, 20 de chacun des bras du pont redresseur du dispositif de redressement puissent être au contact desdites bornes de connexion 46.

On pourra prévoir pour cela que les bornes de connexion 46 pour les électrodes 22 des éléments de redressement 18, 20 présentent une surface de contact 48 se trouvant sur même arc de cercle ou circonférence, pour tous les conducteurs 40, 42, 44. Autrement dit lesdites surfaces de contact 48 se trouvent sur une même circonférence.

On décrit dans la suite l'un des conducteurs 40, 42, 44 sachant que les caractéristiques évoquées pourront être communes à tout ou partie de ceux-ci.

Ledit conducteur 40, 42, 44 est, notamment, de section rectangulaire en variante de section carrée, circulaire avec ou sans méplats ou polygonale. Il s'étend angulairement au moins d'une borne de connexion 46 pour les électrodes 22 des éléments de redressement 18, 20 à l'autre, voir au-delà. Lesdites bornes de connexion 46 sont formées dans une portion du conducteur 40, 42, 44. Autrement dit, le conducteur 40, 42, 44 avec ses bornes de connexion 46 forme un composant unique, issu d'une même matière, par exemple une tige métallique mise en forme.

Le conducteur 40, 42, 44 pourra être radialement déformé au niveau des bornes de connexions 46 en forme de créneau dont les sommets 48 forment les surfaces de contact pour les électrodes 22 des éléments de redressement 18, 20. En variante non illustrée, il pourra s'agir d'épingles avec une boucle dans laquelle pénètre l'électrode 22, qui pourra être pincée.

Ces bornes de connexion 46 pour les électrodes des éléments de redressement de courant 18, 20 sont configurées pour que lesdites électrodes puissent être soudées d'un même côté desdites bornes. Autrement dit, les surfaces de contact 48 se trouvent toutes du même côté du connecteur, notamment le côté extérieur, comme cela apparaît sur l'exemple des figures 1 à 7.

Les créneaux 48 autorisent le passage d'un outil pour serrer les électrodes 22 au contact de la surface 48 et réaliser un bon soudage. Il en est de même des épingles.

Si l'on se reporte de nouveau aux figures 4 à 6, on constate que le conducteur 40, 42, 44 pourra aussi comprendre une borne de connexion 52 pour l'une des sorties de phases de la machine électrique. Cette dernière est, par exemple, angulairement située entre les bornes de connexion 46 pour les électrodes 22 des éléments de redressement 18, 20.

Plus précisément, le conducteur 40, 42, 44 comprend une branche principale 50, portant à sa périphérie interne les bornes de connexion 46 pour les électrodes des éléments de redressement 18, 20. Cette branche 50 présente à sa périphérie externe, c'est-à-dire à son extrémité libre, un crochet 52 pour fixation de la sortie de phase concernée u, v, w. Ce crochet constitue la borne de connexion pour la sortie de phase concernée.

La branche 50 est selon une caractéristique globalement d'orientation radiale. Elle est en forme de bras globalement d'orientation radiale ce qui permet de libérer de la place entre les branches 50 pour l'implantation des éléments de redressement 18, 20.

Ainsi les sorties u, v, w des phases pourront être introduites axialement dans leur crochet respectifs 52 sans besoin de réaliser une mise à longueur, ces sorties traversant les crochets 52. Bien entendu les crochets 52 et les sorties u, v, w sont implanté sur le même arc de cercle c'est-à-dire sur circonférence de diamètre supérieure à celle des surfaces de contact 48.

Les branches 50 pourront être de section rectangulaire dont le plus petit côté est dirigé radialement.

Il ressort de ce qui précède que l'on pourra fixer les sorties u, v, w sur leur crochet respectif 52 par soudage sans être dénudées. Ce soudage pourra être du type Laser. De même le soudage des queues des diodes sur les surfaces 48 pourra être du type Laser.

Ce soudage est aisé car les électrodes 22 sont disposées sur un même arc de cercle pour venir en contact avec les bornes de connexion 46. Bien entendu on pourra faire appel à un autre type de soudage, par exemple de manière connue du type TIG ou MIG à l'aide d'électrodes, voir par sertissage lorsque les sorties u, v, w sont dénudées.

Les surfaces de contact 48 (les sommets des créneaux) s'étendent, de manière précitée, circonférentiellement de part et d'autre d'un bras 50 à la périphérie interne de ce bras.

Cette disposition permet un soudage rapide, les créneaux permettant de dégager un passage pour pincer les électrodes 22 au contact des surfaces 48 constituées par les sommets des créneaux et réaliser un soudage fiable et rapide.

Selon une variante, le crochet 52 pourra être remplacé par une boucle, une telle solution étant par exemple utilisée lorsque les sorties des phases comportent plusieurs fils à connecter ensembles.

Ainsi qu'il ressort de la description et des dessins ladite branche principale 50 est prolongée à sa périphérie interne par deux portions 54, 56 (Figures 4, 5 et 7) portant chacune l'une des bornes de connexion 46 à surface de contact 48 pour les électrodes 22 des éléments de redressement 18, 20. Les portions 54, 56 s'étendent circonférentiellement de part et d'autre de la branche 50. Chaque dite portion est angulairement dans le prolongement l'une de l'autre et axialement décalée l'une par rapport à l'autre, lesdites portions se réunissant à l'une de leur extrémité pour définir la branche principale en forme de bras globalement d'orientation radiale 50 portant à sa périphérie externe le crochets de connexion 52 à l'une des sorties des phases u, v, w. Par axialement décalé, on entend décalé selon un axe orthogonal au disque portant l'arc de cercle au niveau duquel sont prévues les surfaces de connexion 48 pour les électrodes 22 des éléments de redressement 18, 20. Autrement dit la branche principale 50 en forme de bras globalement d'orientation radiale par rapport à l'axe X-X présente une épaisseur correspondant à la somme des épaisseurs des portions portant chacune l'une des bornes de connexion 46 pour les électrodes des éléments de redressement.

On décrit maintenant l'agencement des conducteurs entre eux.

Lesdits conducteurs 40, 42, 44 sont, par exemple, positionnés dans le prolongement angulaire les uns des autres de sorte que, comme déjà dit, les électrodes de connexion des éléments de redressement de chacun des bras du dispositif de redressement, prévues disposées sur un même premier arc de cercle ou circonférence, puissent être au contact de leurs surfaces de contact 48 de leurs bornes de connexion 46 pour les électrodes 22 des éléments de redressement.

Les bornes de connexion 52 pour les sorties des phases de la machine électrique sont sur un même second arc de cercle, concentrique au premier arc de cercle c'est-à-dire sur une même seconde circonférence concentrique à la première circonférence d'implantation des électrodes et de diamètre supérieur.

Les conducteurs 40, 42, 44 pourront se chevaucher angulairement, notamment avec un léger décalage radial.

Ainsi, deux des conducteurs, ici les conducteurs 40 et 42, sont prolongés angulairement, par exemple, pour définir de manière précitée les bornes de connexion 60 , 60' au régulateur de tension 62 de la machine électrique, non illustré en détail dans ces figures, dites bornes de commande. Ces prolongements pourront être concentriques et se terminer par les bornes de connexion et de commande 60, 60' prévues se présentant sous la forme de deux demi- anneaux 60, 60' ou deux demi-cercles situés en vis-à-vis l'un de l'autre.

Toujours comme illustré, le connecteur comprend, par exemple de manière précitée, un conducteur supplémentaire 64, dit conducteur de connexion statorique, comprenant une branche de liaison électrique 66 à des branches 68 en forme de bras d'orientation globalement radiale par rapport à l'axe X-X présentant à leur périphérie externe des bornes de connexion 70 pour les entrées u', v', w' des phases de la machine électrique.

Ce conducteur 64 est métallique en étant par exemple en cuivre ou en aluminium comme les conducteurs 40, 42, 44.

Les bornes de connexion 70 sont donc reliées à des extrémités des enroulements statoriques de la machine électrique opposées à celles reliées aux bornes de connexion 46 du pont redresseur. Ledit conducteur supplémentaire 64 sert à établir le mode de connexion des phases de la machine électrique, ici en étoile.

Les entrées u', v', w' des phases sont recouvertes d'un isolant électrique, tel que de l'émail, comme les sorties u, v, w.

Tout ce qui a été dit en ce qui concerne la fixation des sorties u, v, w avec les borne de connexion 52, par exemple par soudage sans dénudage, s'applique aux entrées u', v', w'.

Les bornes 70 s pourront avoir une forme identique à celle des crochets 52. Les crochets 52, 70 d'une même phase sont tournés l'un vers l'autre comme visible par exemple à la figure 4. Les bras 68 sont de forme identique aux bras 50. Ils ont donc dans ce mode de réalisation une section rectangulaire.

En variante les bras 70, 50 pourront avoir une section différente, les bras 68 étant par exemple de section circulaire, carré ou polygonale.

Les bornes 52, 70 pourront en variante avoir une forme différente.

La branche de liaison 66 s'étend globalement circonférentiellement. On notera que cette branche de liaison est d'un seul tenant à chacune de ses extrémité avec un bras 68, respectivement avec le bras 68 associé avec l'entré u' et avec le bras associé avec l'entrée w'. Le bras 68 associé à l'entrée v' est rapporté par exemple par soudage sur la branche 66 et présente à cet effet un prolongement circonférentiel en contact avec la branche 66.

La branche de liaison électrique 66 dudit conducteur de connexion statorique 64 est positionnée dans le prolongement axial de la portion du ou des conducteurs 40, 42, 44 portant les bornes de connexion pour les électrodes 22 du dispositif de redressement. Les bras 68 du conducteur statorique 64 sont, par exemple, globalement d'orientation radiale et orientés extérieurement. Ils sont interposés angulairement entre les branches 50 en forme de bras 50 des conducteurs de bras de redressement 40, 42, 44. Ces branches principales 50 sont également orientées vers l'extérieur en alternance circonférentielle avec les bras 68.

En variante on pourra tirer partie de cette alternance des branches 50 en forme de bras et des bras 68 comme visible à la figure 7.

Ainsi l'une au moins des portions 54, 56 d'une phase portant une borne de connexion 46 à créneau 48 pourra être prolongée par un bras 68 pour un montage en triangle des phases. Le connecteur 8 ainsi modifié est adapté au montage du bobinage du stator décrit par exemple dans le document WO 92/06527. Dans ce cas la branche 66 des figures précédentes est supprimée.

Comme plus particulièrement visible aux figures 1 à 3, 5 et 6, les conducteurs de bras de redressement 40, 42, 44 et/ou le conducteur de connexion statorique 64 sont, par exemple, surmoulés dans un matériau électriquement isolant formant le corps 10 du connecteur. Il pourra s'agir de matériau plastique. Ledit corps 10 s'interrompt au niveau desdites bornes 46 pour les électrodes des éléments de redressement et/ou au niveau des bornes 52, 70 des différents conducteurs 40, 42, 44, 64.

On dispose de la sorte d'un connecteur présentant une bonne rigidité, notamment grâce aux bornes 46 en forme de créneau, au chevauchement angulaire des conducteurs de bras de redressement 40, 42, 44, en particulier au niveau de leur prolongement vers les bornes de commande 60, 60' et/ou à la présence du conducteur statorique 64.

Ce corps comporte (Figures 3 et 6) un muret 200 électriquement isolant qui pourra contenir au moins les portions des conducteurs 40, 42, 44 portant les bornes de connexion 46 pour les électrodes 22 des éléments des éléments de redressement 18, 20. En variante ce muret pourra contenir également la branche de liaison électrique 66 du conducteur supplémentaire de liaison statorique 64 implantée en dessous des conducteurs 40, 42, 44.

Ce muret 200 est globalement de forme annulaire et s'étend globalement perpendiculairement par rapport au dissipateur 2.

Il est implanté entre les ailettes internes 34, implantées en regard d'au moins une ouverture d'entrée d'air 300, et les ailettes externes 32. Ces ailettes 32, 34 sont donc décalées radialement les unes par rapport aux autres. On notera que la périphérie externe du dissipateur 2 est ondulée (Figures 1 et 3) pour l'implantation des ailettes externes 32.

Le muret pourra présenter des ondulations internes 252 en regard d'au moins deux bornes à surface de contact 48 pour créer des dégagements et un meilleur appui sur le dissipateur 2.

Le muret pourra comporter un nombre d'ondulations 252 égal au nombre de diodes positives 20.

Les ondulations 252 sont adjacentes aux ailettes internes 34.

Les ailettes externes 32 sont implantées radialement à l'extérieur des ailettes 34.

Le muret pourra comporter une entaille de dégagement 251 au niveau d'au moins une borne à surface de contact 48.

Le muret 200 est doté de bras saillants 250 électriquement isolant orienté vers l'extérieur et qui pourront contenir les branches principales 50.

En variante certains bras pourront contenir un bras 68.

Les bras 250 sont rayonnants vers l'extérieur et délimitent avec le muret un espace de dégagement pour les éléments de redressement 18,20.

Chaque élément 18, 20 est implanté entre deux bras consécutifs délimitant avec le muret 200 un espace évasé vers l'extérieur.

Ainsi le connecteur 8 comprend plusieurs compartiments évasés vers l'extérieur avec un fond comportant une surface de contact 48. Ces compartiments sont dans ce mode de réalisation dédiés chacun à l'implantation d'un élément 18, 20

Le corps 10 du connecteur 8 pourra comprendre des fixations 74 au dissipateur positif du dispositif de redressement et au fond 160 du palier 6, notamment sous la forme de puits pour le passage des organes de fixation 26, tels que des vis. Certaines desdites fixation 74 pourront être élargies et prolonger circonférentiellement un bras isolant 250. Deux des fixations 74 pourront servir à la fixation des extrémités circonférentielles du connecteur avec le fond 160 et le régulateur 62.

Comme mieux visible dans les figures 1 à 3 le connecteur 8 est fixé à l'aide de quatre vis 26, deux de ces vis 26 ayant une tête prenant appui sur le corps 72 du régulateur 62 pour la fixation des extrémités circonférentielles du connecteur 8 au fond 160 via deux cheminées 24. L'une des vis 26, celle la plus proche du connecteur 165, sert également à la fixation du dissipateur 2 au fond 160 avec intervention d'un canon isolant épaulé précité entre la vis et un trou associé du dissipateur 2. Deux autres vis 26 intermédiaires sont prévues dont les têtes prennent appui sur la face frontale des fixations élargies 74 la plus éloignée du fond transversal 160 pour fixer le connecteur au fond 160. Ces deux vis traversent à isolation électrique à la faveur d'un canon isolant 80 un trou du dissipateur 2 pour fixer également le dissipateur 2 au fond 160 et ce à isolation électrique. Les deux fixations élargies 74 constituent un élément presseur prenant appui sur l'épaulement externe du canon complémentaire 80 pour serrer le dissipateur positif entre les paires de canon et canon complémentaire 80.Trois des vis 26 servent donc à la fixation du dissipateur 2 sur le fond 160. Une quatrième vis 26 associée au manchon 167 sert également, de manière précitée, à la fixation du dissipateur 2 et du régulateur au fond 160.

Le régulateur 72 est donc fixé en trois points au fond 160, tandis que le dissipateur 2 et le connecteur 8 sont fixés en quatre points au fond 160.

Le dissipateur 2 est isolé électriquement par rapport au fond 160 du palier de manière précitée à l'aide des canons précités en matière électriquement isolante intercalés entre les corps des organes de fixation et les trous associés du dissipateur 2 traversés par les vis 26 se fixant dans les cheminées 24. Un tel canon complémentaire isolant en appui sur la face dorsale d'une fixation 74 est visible par exemple en 80 à la figure 1. En variante la face transversale dorsale du dissipateur 2 tournée vers le fond 160 pourra être équipée, au niveau de chaque trou de passage d'une vis, de douilles électriquement isolantes à collerette d'appui pour contact avec l'épaulement externe de la cheminée 24 concernée. Ces douilles traversent le trou concerné du dissipateur. En variante un revêtement en matière électriquement intervient entre le fond 160 et la face dorsale du dissipateur 2, les trous de passage des vis étant recouverts d'un isolant.

Dans tous les cas on tire partie du connecteur 8 pour l'isolation des vis 26.

Comme mieux visible à la figure 1, l'écartement angulaire entre les bras 50, 68 portant les bornes de connexion 52, 70 pour les phases de la machine électrique est configuré pour autoriser une circulation d'air au niveau électrodes des éléments de redressement 18, 20. En particulier, comme déjà évoqué, il est prévu pour laisser la place aux ailettes extérieures 32.

On pourra ainsi obtenir une dissipation thermique satisfaisante même dans les configurations conformes à l'exemple illustré où les queues des diodes sont dans le même sens et où le connecteur 8 est au dessus du dissipateur positif 2.

Cette disposition permet de faire varier la taille du connecteur 2.

Ainsi le régulateur 62 pourra être étendu circonférentiellement au niveau de son extrémité circonférentielle voisine du connecteur 165.

Ainsi dans les figures 1 à 3 l'extrémité circonférentielle du connecteur 8 présente une extrémité élargie de grande taille.

Lorsque l'on rallonge l'extrémité circonférentielle précité du régulateur 62, la taille de cette extrémité élargie diminue pour devenir celle des figures 4 à 7. Bien entendu il faut déplacer la cheminée 24 correspondante. Cela permet de fixer plus aisément les extrémités du bobinage fixe d'excitation du rotor, qui peuvent être implantées ainsi à proximité de l'entrée w'.

On pourra également encore prolonger cette extrémité du régulateur et/ou du connecteur et ce dans le cadre d'une application d'une machine électrique tournante sans balais et à au moins un bobinage fixe d'excitation du rotor du fait que le porte -balais est supprimé de sorte que le connecteur 8 et le régulateur peuvent être dans le même plan.

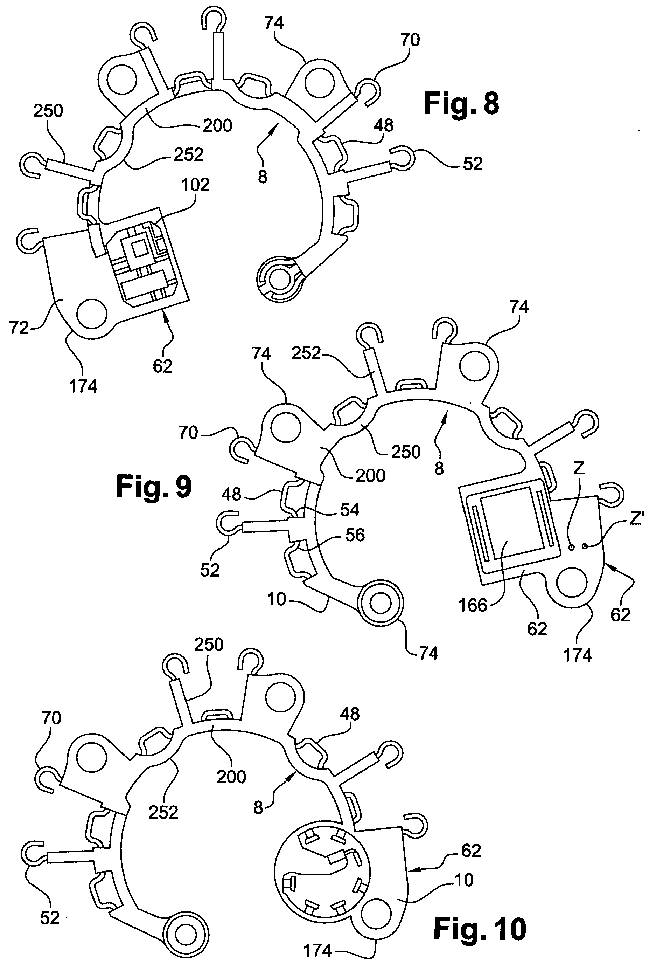

Ainsi comme illustré aux figures 8 à 10, le connecteur 8 pourra intégrer le régulateur de tension 62. Plus précisément, le corps isolant 10 du connecteur et le corps isolant 72 du régulateur de tension 62 pourront être issus de matière. Dans les figures 8 à 10 on n'a pas représenté le connecteur du régulateur pour plus de clarté.

De façon plus détaillé, le régulateur de tension, par exemple du type de celui décrit dans les documents EP 1 058 369, pourra comprendre (Figure 8), par exemple, un circuit de commande comprenant un ou plusieurs composants électroniques 102, aptes à participer à la commande de ladite machine électrique, un dissipateur de chaleur 166, par exemple présentant (Figure 9) des ailes de dissipation de chaleur, et différentes traces électriques, intégrées dans ledit corps 72 du régulateur 62. En variante (Figure 10) le régulateur pourra être du type de celui décrit dans le document FR 2 754 650. A la lumière de ce document il ressort dans les figures 9 et 10 que les conducteurs 40 et 42 sont prolongés jusqu'au circuit de commande 102 du régulateur 62 qui peut être du type mono fonction ou multifonctions En variante, figure 8, le régulateur 62 pourra recevoir une information que d'une seule phase, par exemple le conducteur 44 étant alors prolongé jusqu'au circuit de commande du régulateur. Dans ce cas les conducteurs 40, 42 pourront être conservés. En variante les conducteurs 40, 42 pourront être simplifiés en étant dépourvus des extrémités 60, 60'.

Le dissipateur 166 est en relation d'échange thermique avec le circuit électronique de commande afin d'assurer son refroidissement. Le circuit électronique de commande 102 est constitué, par exemple, d'un circuit à semi-conducteur ou puce électronique, notamment du type ASIC. Il assure une régulation de la tension délivrée au réseau de bord par la machine électrique tournante. Pour cela, il contrôle, par exemple, le courant délivré au bobinage d'excitation du rotor, notamment, en fonction de différentes données d'entrée telles que, entres autres, la tension disponible aux bornes de la batterie, la vitesse de rotation du moteur thermique et/ou la température du moteur thermique, les tensions de certaines des phases de la machine électrique, qui lui sont délivrées par les traces électriques auxquels il est connecté.

A la figure 9 on a schématisé en z, z' les extrémités du bobinage d'excitation du rotor de la machine aptes à être reliées électriquement au circuit de commande du régulateur 62. Il ressort des figures 8 à 10 que l'ensemble régulateur 62 - connecteur 8 présente une extrémité circonférentielle trouée élargie 174 au niveau du régulateur. Le régulateur 62 pourra comporter dorsalement, au niveau du trou 274 de l'extrémité 174, une creusure pour recevoir un anneau électriquement conducteur destiné à venir en appui sur la cheminée du fond du palier comme dans les figures 1 à 3, ledit anneau appartenant à une trace électriquement conductrice, dite trace de masse, reliée au circuit électronique de commande 102. L'extrémité élargie 174 du régulateur 62 pourra également comporter un autre trou 374 doté d'une creusure pour recevoir un autre anneau électriquement conducteur appartenant à une trace électriquement conductrice, dite trace positive ou trace B+ pour contact avec le dissipateur positif au niveau de sont extrémité adjacente à la borne B+.
L'ensemble intégré régulateur 62- connecteur 8 est de forme annulaire comme le fond 160. Il est en forme d'arc de cercle et présente deux extrémités circonférentielles formées à la faveur d'une fente. L'ensemble régulateur de tension 62- connecteur 8 est manipulable et transportable. Le connecteur 8, de manière précitée est prévu en forme d'arc de cercle, de sorte que le corps 72 du régulateur de tension 62 est lié au corps 10 du connecteur à l'une des extrémités du dit arc à proximité de la borne B+ (14, 14') du dissipateur 2.

Cette disposition permet de diminuer le nombre de points de fixation du régulateur comme visible dans ces figures 8 à 10. On pourra simplifier ce dissipateur 2 car la présence du manchon 167 faisant entretoise entre le corps du régulateur de tension et le corps du dissipateur n'est plus nécessaire.

En variante on pourra rallonger l'extrémité circonférentielle 174 pour que celle-ci soit confondue avec l'autre extrémité circonférentielle 74 de l'ensemble 62-8 de sorte que l'on supprime un point de fixation. Ainsi on pourra fixer l'ensemble régulateur de tension 62- connecteur 8 à l'aide de quatre organes de fixation, tels que des vis 26, sans changer le nombre de points de fixation (quatre) du dissipateur 2 puisque celui-ci est fixé à l'une de ces extrémités circonférentielle en un point distinct du connecteur 8.

Bien entendu en variante le dissipateur 166 à ailes de dissipation de chaleur du régulateur pourra être positionné de façon que ses ailes puissent orienter un flux d'air vers une zone de dépression prévu entre le corps du dissipateur et la machine électrique tournante comme décrit dans le document FR 2 939 410 auquel on se reportera. Ce dissipateur pourra comporter au moins une ailette de dissipation supplémentaire comme visible à la figure 5 de ce document FR 2 939 410.

L'invention concerne également une machine électrique tournante équipée d'un dispositif de redressement tel que décrit plus haut.

Il pourra s'agir d'un alternateur à balais, de sorte qu'un régulateur par exemple du type de celui décrit dans le document EP 1 58 369 est associé au connecteur 8, ou sans balai à au moins un bobinage fixe d'excitation du rotor tel que celui décrit dans le document FR 2 744 575 ou FR 1 591 189. Cette dernière configuration est en particulier avantageuse dans le cadre de la variante de connecteur conforme à l'invention intégrant un régulateur de tension.

Comme déjà vu, le mode de connexion des enroulements statoriques de la machine électrique peut être effectué au niveau du connecteur 8. De façon plus classique, elle pourra aussi être implantée dans le stator comme décrit dans le document FR 2 818 821.

L'alternateur pourra comporter un rotor à griffes comme dans les documents précités ou à pôles saillant comme décrit dans le document WO 02/054566. Dans ce cas il est prévu plusieurs bobinages d'excitation pour le rotor.

La machine électrique pourra être en variante équipée de balais de sorte qu'un régulateur par exemple du type de celui décrit dans le document EP 1 58 369 est associé au connecteur.

L'alternateur peut être doté d'au moins un ventilateur interne, comme dans les documents WO 02/054566 et FR 2 818 821 ou d'un ventilateur externe de sorte que la présence des ouvertures 30 n'est pas obligatoire.

## Revendications

1. Connecteur pour dispositif de redressement du courant produit par une machine électrique tournante, notamment alternateur de véhicule automobile, ledit connecteur (8) étant configuré pour établir, pour chaque phase (u, v, w - u', v', w') de la machine électrique, une connexion électrique entre l'une des phases de ladite machine électrique et un bras respectif du dispositif de redressement du courant, ledit connecteur (8) comprenant des conducteurs électriques (40, 42, 44) présentant chacun au moins deux bornes de connexion (46), positionnées angulairement distantes l'une de l'autre de façon à ce que des électrodes (22) de connexion d'éléments de redressement de courant (18, 20) d'au moins deux des bras du dispositif de redressement du courant, prévues disposées sur un même arc de cercle, puissent être au contact desdites bornes de connexion (46), dans lequel tout ou partie des conducteurs (40, 42, 44) sont radialement déformé au niveau des bornes de connexions (46) en forme de créneau dont les sommets (48) forment les surfaces de contact pour les électrodes (22) des éléments de redressement de courant (18, 20), lesdites surfaces de contact (48) se trouvant sur un même arc de cercle, et chacun des conducteurs (40, 42, 44) comprenant également une borne de connexion (52) pour l'une des phases de la machine électrique, ledit connecteur étant **caractérisé en ce que** tout ou partie des conducteurs (40, 42, 44) comprennent une branche principale (50) globalement d'orientation radiale, portant à sa périphérie interne les bornes de connexion (46) pour les électrodes des éléments de redressement (18, 20) du conducteur correspondant, et à sa périphérie externe une borne de connexion (52) pour l'une des phases de la machine électrique du conducteur, prévue radialement distante desdites bornes de connexion (46) pour les électrodes des éléments de redressement, ladite branche principale (50) étant prolongée à sa périphérie interne par deux portions (54, 56) portant chacune l'une des bornes (46) de connexion pour les électrodes (22) des éléments de redressement, chaque dite portion étant angulairement dans le prolongement l'une de l'autre et axialement décalée l'une par rapport à l'autre, lesdites portions se réunissant à l'une de leur extrémité pour définir la branche principale (50) globalement en forme de bras portant la borne de connexion (52) pour l'une des phases de la machine électrique.

2. Connecteur selon la revendication 1 dans lequel la borne de connexion (52) pour l'une des phases de la machine électrique est angulairement située entre les bornes de connexion (46) pour les électrodes des éléments de redressement (18, 20) du conducteur (40, 42, 44) correspondant.

3. Connecteur selon l'une quelconque des revendications précédentes dans lequel les conducteurs (40, 42, 44) se chevauchent angulairement.

4. Connecteur selon la revendication 3, **caractérisé en ce que** le corps (10) du connecteur (8) comporte un muret globalement de forme annulaire contenant les portions portant les bornes de connexions (46) pour les éléments de redressement de courant (18, 29).

5. Connecteur selon la revendication 4, **caractérisé en ce que** le muret contient la branche de liaison électrique (66) du conducteur supplémentaire (64).

6. Connecteur selon la revendication 4 ou 5 **caractérisé en ce que** le muret (200) porte des branches (250) rayonnante vers l'extérieur présentant extérieurement des bornes de connexion (50, 70) pour les phases de la machine électrique.

7. Dispositif de redressement de courant comprenant plusieurs éléments de redressement (18, 20), un dissipateur (6), dit négatif, un dissipateur (2), dit positif, et un connecteur (8) selon l'une quelconque des revendications précédentes, destiné à établir une connexion électrique entre les éléments de redressement (18, 20) et les phases (u, v, w)- u', v', w') de la machine électrique dont le courant est destiné à être redressé par ledit dispositif.

8. Dispositif de redressement selon la revendication 7 dans lequel certains (20) des éléments de redressement sont reliés au dissipateur positif (2), prévu muni d'ailettes de refroidissement (32) situées extérieurement par rapport auxdits éléments de redressement (20).

9. Machine électrique tournante équipée d'un dispositif de redressement selon la revendication 7 ou 8.

## Patentansprüche

1. Verbinder für eine Vorrichtung zum Richten von Strom, der von einer sich drehenden elektrischen Maschine erzeugt wird, insbesondere einer Lichtmaschine eines Kraftfahrzeugs, wobei der Verbinder (8) ausgelegt ist, für jede Phase (u, v, w - u', v', w') der elektrischen Maschine, eine elektrische Verbindung zwischen einer der Phasen der elektrischen Maschine und einem jeweiligen Arm der Stromrichtervorrichtung herzustellen, wobei der Verbinder (8) elektrische Leiter (40, 42, 44) umfasst, welche jeweils mindestens zwei Anschlussklemmen (46) aufweisen, die winkelmäßig voneinander beabstandet derart positioniert sind, dass die Anschlusselektroden (22) der Stromrichterelemente (18, 20) von mindestens zwei Armen der Stromrichtervorrichtung, die auf demselben Kreisbogen angeordnet sind, mit den Anschlussklemmen (46) in Kontakt stehen können, wobei alle oder ein Teil der Leiter (40, 42, 44) radial auf der Höhe der Anschlussklemmen (46) in der Form von Zinnen verformt sind, deren Scheitel (48) Kontaktflächen für die Elektroden (22) der Stromrichterelemente (18, 20) bilden, wobei sich die Kontaktflächen (48) auf demselben Kreisbogen befinden, und wobei jeder der Leiter (40, 42, 44) auch eine Anschlussklemme (52) für eine der Phasen der elektrischen Maschine umfasst, wobei der Verbinder **dadurch gekennzeichnet ist, dass** alle oder ein Teil der Leiter (40, 42, 44) eine Hauptverzweigung (50) mit global radialer Ausrichtung umfassen, welche an ihrem Innenumfang Anschlussklemmen (46) für die Elektroden der Richterelemente (18, 20) des entsprechenden Leiters trägt, und an ihrem Außenumfang eine Anschlussklemme (52) für eine der Phasen der elektrischen Maschine des Leiters, die radial von Anschlussklemmen (46) für die Elektroden der Richterelemente beabstandet vorgesehen sind, wobei die Hauptverzweigung (50) an ihrem Innenumfang durch zwei Abschnitte (54, 56) verlängert ist, die jeweils eine der Anschlussklemmen (46) für die Elektroden (22) der Richterelemente tragen, wobei jeder Abschnitt winkelmäßig in der Verlängerung voneinander und axial versetzt in Bezug aufeinander liegt, wobei die Abschnitte sich an einem ihrer Enden vereinigen, um die Hauptverzweigung (50) global in der Form eines Arms zu definieren, der die Anschlussklemme (52) für eine der Phasen der elektrischen Maschine trägt.

2. Verbinder nach Anspruch 1, wobei die Anschlussklemme (52) für eine der Phasen der elektrischen Maschine winkelmäßig zwischen den Anschlussklemmen (46) für die Elektroden der Richterelemente (18, 20) des entsprechenden Leiters (40, 42, 44) angeordnet ist.

3. Verbinder nach einem der vorhergehenden Ansprüche, wobei die Leiter (40, 42, 44) einander winkelmäßig überlappen.

4. Verbinder nach Anspruch 3, **dadurch gekennzeichnet, dass** der Körper (10) des Verbinders (8) eine global ringförmige Teilwand umfasst, welche die Abschnitte enthält, die die Anschlussklemmen (46) für die Stromrichterelemente (18, 29) tragen.

5. Verbinder nach Anspruch 4, **dadurch gekennzeichnet, dass** die Teilwand die elektrische Verbindungsverzweigung (66) des ergänzenden Leiters (64) enthält.

6. Verbinder nach Anspruch 4 oder 5, **dadurch gekennzeichnet, dass** die Teilwand (200) strahlenförmig nach außen ausgehende Verzweigungen (250) trägt, die außen die Anschlussklemmen (50, 70) für die Phasen der elektrischen Maschine tragen.

7. Stromrichtervorrichtung, umfassend mehrere Richterelemente (18, 20), einen als negativ bezeichneten Ableiter (6), eine als positiv bezeichneten Ableiter (2) und einen Verbinder (8) nach einem der vorhergehenden Ansprüche, der dazu bestimmt ist, eine elektrische Verbindung zwischen den Richterelementen (18, 20) und den Phasen (u, v, w - u', v', w') der elektrischen Maschine herzustellen, deren Strom dazu bestimmt ist, von der Vorrichtung gerichtet zu werden.

8. Richtervorrichtung nach Anspruch 7, wobei bestimmte (20) der Richterelemente mit dem positiven Ableiter (2) verbunden sind, der mit Kühllamellen (32) ausgestattet vorgesehen ist, die außerhalb in Bezug auf die Richterelemente (20) angeordnet sind.

9. Sich drehende elektrische Maschine, die mit einer Richtervorrichtung nach Anspruch 7 oder 8 ausgestattet ist.

## Claims

1. Connector for a device for rectifying the current produced by a rotating electrical machine, in particular a motor vehicle alternator, said connector (8) being configured to establish, for each phase (u, v, w - u', v' w') of the electrical machine, an electrical connection between one of the phases of said electrical machine and a respective arm of the current rectification device, said connector (8) comprising electrical conductors (40, 42, 44) each having at least two connection terminals (46), positioned angularly remote from one another in such a way that connection electrodes (22) of current rectification elements (18, 20) of at least two of the arms of the current rectification device, which electrodes are provided in a manner arranged on one and the same circular arc, are able to make contact with said connection terminals (46), wherein all or some of the conductors (40, 42, 44) are radially deformed at the connection terminals (46) in the form of a segment whose peaks (48) form the contact surfaces for the electrodes (22) of the current rectification elements (18, 20), said contact surfaces (48) being located on one and the same circular arc, and each of the conductors (40, 42, 44) also comprising a connection terminal (52) for one of the phases of the electrical machine, said connector being **characterized in that** all or some of the conductors (40, 42, 44) comprise a main branch (50) with a radial overall orientation, bearing, at its internal periphery, the connection terminals (46), for the electrodes of the rectification elements (18, 20), of the corresponding conductor and, at its external periphery, a connection terminal (52), for of one of the phases of the electrical machine, of the conductor, which terminal is provided in a manner radially remote from said connection terminals (46) for the electrodes of the rectification elements, said main branch (50) being extended at its internal periphery by two portions (54, 56) each bearing one of the connection terminals (46) for the electrodes (22) of the rectification elements, each said portion being angularly in the extension of one another and axially offset with respect to one another, said portions joining at one of their ends so as to define the main branch (50) in the overall form of an arm bearing the connection terminal (52) for one of the phases of the electrical machine.

2. Connector according to Claim 1, wherein the connection terminal (52) for one of the phases of the electrical machine is angularly situated between the connection terminals (46), for the electrodes of the rectification elements (18, 20), of the corresponding conductor (40, 42, 44).

3. Connector according to either one of the preceding claims, wherein the conductors (40, 42, 44) overlap one another angularly.

4. Connector according to Claim 3, **characterized in that** the body (10) of the connector (8) includes a wall of annular overall form containing the portions bearing the connection terminals (46) for the current rectification elements (18, 29).

5. Connector according to Claim 4, **characterized in that** the wall contains the electrical linking branch (66) of the additional conductor (64).

6. Connector according to Claim 4 or 5, **characterized in that** the wall (200) bears branches (250) fanning out towards the outside and having connection terminals (50, 70) on the outside for the phases of the electrical machine.

7. Current rectification device comprising a plurality of rectification elements (18, 20), a dissipator (6), termed negative dissipator, a dissipator (2), termed positive dissipator, and a connector (8) according to any one of the preceding claims, intended to establish an electrical connection between the rectification elements (18, 20) and the phases (u, v, w - u', v', w') of the electrical machine whose current is intended to be rectified by said device.

8. Rectification device according to Claim 7, wherein some (20) of the rectification elements are linked to the positive dissipator (2), provided in a manner equipped with cooling fins (32) situated on the outside with respect to said rectification elements (20).

9. Rotating electrical machine equipped with a rectification device according to Claim 7 or 8.
